# EUROPEAN PATENT APPLICATION

(11) **EP 4 227 910 A1**
(43) Date of publication of application: **16.08.2023**
(21) Application number: 22305159.0
(22) Date of filing: 14.02.2022
(51) Int. Cl.: G06V 10/82, G06V 10/44, G06T 11/00, G06T 11/20, G06F 16/53

(54) **COMPUTER IMPLEMENTED METHOD FOR DETERMINING A SIMILARITY SCORE BETWEEN A REFERENCE EYEGLASSES FRAME AND A PLURALITY OF MODEL EYEGLASSES FRAMES**

(71) Applicant: Essilor International, 94220 Charenton-Le-Pont (FR)
(72) Inventor: MIMOUN, Lola, 75017 PARIS (FR); SILEO, Cédric, 78830 BULLION (FR)
(74) Representative: Korakis-Ménager, Sophie

(57) **Abstract**

Computer-implemented method, device and system, for determining a similarity score between a reference eyeglasses frame and a plurality of model eyeglasses frames. The method comprises a step of generating a picture using values of a first subset of physical parameters of the reference eyeglasses frame, a step of selecting at least one of the model eyeglasses frames, based on values of a second subset of the physical parameters and by comparison of the values of the second subset of the physical parameters of the reference eyeglasses frame with the values of the second subset of the physical parameters of each of the model eyeglasses frames and a step of determining a similarity score for each of the selected model eyeglasses frames, using a convolutional neural network, by comparing the picture of the eyeglasses frame with a picture of the selected model eyeglasses frames.

## Description

### FIELD

Various aspects of this disclosure generally relate to the field of the determination of a similarity score between eyeglasses frames.

### BACKGROUND

The determination of a similarity score between eyeglasses frames allows handling different tasks. For example, this similarity score can be used to manufacture a lens or to help the user choose a suitable eyeglasses frame.

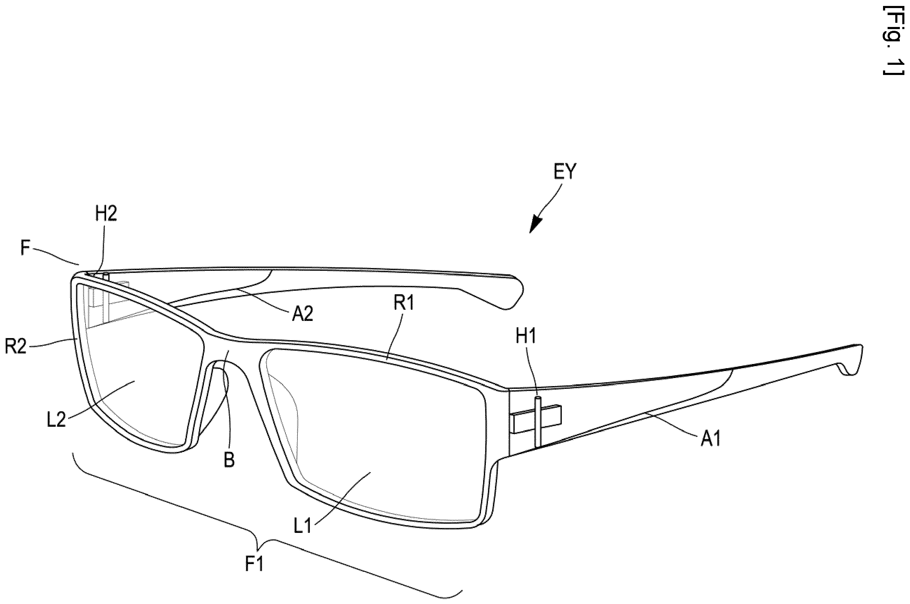

The figure 1 represents an example of eyeglasses EY. Eyeglasses are also known as eyewear. These eyeglasses EY comprise two lenses L1 and L2 and a frame F. The frame F comprises two arms or temples A1 and A2 and a front part F1. The front part F1 comprises a right rim R1 and left rim R2 linked together by a bridge B. The front part F1 and the two arms A1 and A2 are linked using two hinges H1 and H2. The hinges H1 and H2 allow the user to fold the arms A1 and A2 along the front part F1. The rims R1 and R2 of the frame F1 are configured to receive and to maintain the lenses L1 and L2.

Actually, to identify the frame F of eyeglasses the Eye Care Professional (ECP) refers to a reference number or a bar code. The reference and the bar code are generally located on the internal side of one of the arms or both arms. By internal side, we mean the side facing the user when the user is wearing the eyeglasses.

However, in some situations, this reference number or bar code can have been deleted. This deletion can be originated from, for example, the contact of the face of the user with the internal side of the arm. Furthermore, barcodes or reference numbers are not always stored in databases that can be easily accessed by the eye care professional. Furthermore, there is no known method to determine frames F that are similar to a frame F using the reference number or bar code of this frame F.

Therefore there is a need for a method or a device to identify one or more frames F from a similarity score calculated on part of its physical characteristics, then to manufacture the lenses for the closest frame F or offer the Eye Care Professional a set of close frames F.

### SUMMARY

The following presents a simplified summary in order to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a computer-implemented method for determining a similarity score between a reference eyeglasses frame and a plurality of model eyeglasses frames. The method comprises a step of generating a picture using values of a first subset of physical parameters of the reference eyeglasses frame, a step of selecting at least one of the model eyeglasses frames, based on values of a second subset of the physical parameters and by comparison of the values of the second subset of the physical parameters of the reference eyeglasses frame with the values of the second subset of the physical parameters of each of the model eyeglasses frames and a step of determining a similarity score for each of the selected model eyeglasses frames, using a convolutional neural network, by comparing the picture of the eyeglasses frame with a picture of the selected model eyeglasses frames.

Another aspect of this disclosure is a device comprising a memory and a processor, the device being arranged to execute the steps of the method for determining a similarity score between a selected eyeglasses frame and a plurality of model eyeglasses frames. The method comprises a step of generating a picture using values of a first subset of physical parameters of the reference eyeglasses frame, a step of selecting at least one of the model eyeglasses frames, based on values of a second subset of the physical parameters and by comparison of the values of the second subset of the physical parameters of the reference eyeglasses frame with the values of the second subset of the physical parameters of each of the model eyeglasses frames, a step of determining a similarity score for each of the selected model eyeglasses frames, using a convolutional neural network, by comparing the picture of the eyeglasses frame with a picture of the selected model eyeglasses frames.

Another aspect of this disclosure is a system comprising the device, a 3D scanner or a measuring arm.

### DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
Figure 1 represents the eyeglasses.
Figure 2 represents a system.
Figure 3 represents a first embodiment of a method to determine a similarity score.
Figure 4 represents an embodiment of a step of generating a picture.
Figure 5 represents a second embodiment of a method to determine a similarity score.

### DETAILED DESCRIPTION OF EMBODIMENTS

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

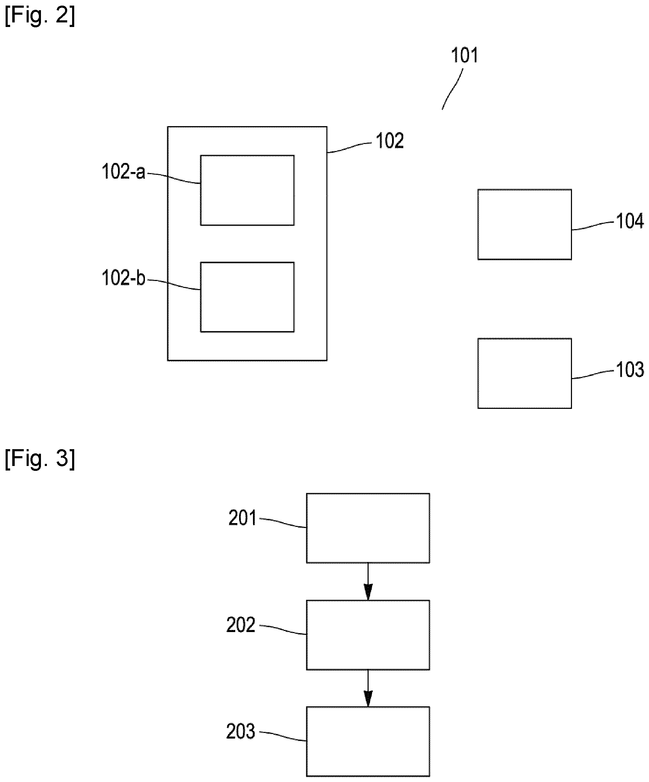

Figure 2 represents a system 101 to determine a similarity score between a reference eyeglasses frame F and a plurality of model eyeglasses frames F. This system 101 comprises a device 102. The device 102 comprises a memory 102-a and a processor 102-b. This device is for example a calculation module, a computer, a mobile device like a smartphone or a tablet. The device 102 can also be a virtual machine located on a cloud network or a server not co-located with the user of the system 101. The reference eyeglasses frame F and the model eyeglasses frames F are similar to the one presented in figure 1 and comprise the same features

The system 101 can also comprise a screen 104. This screen can be part of the device 102 or can be an independent device connected to the device 102.

Examples of processors 102-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 102-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the processor 102-a of the device 102.

The system 101 also comprises a measurement device 103 to determine points of a border of a right rim R1 of the eyeglasses frame F, and points of a border of a left rim R2 of the eyeglasses frame F, and a distance separating a centre of the right rim R1 and a centre of the left rim R2. This measurement device 103 is for example a 3D scanner or a measuring arm. In some embodiments the device 103 and the device 102 can be the same device.

The memory 102-a is configured to store a computer program comprising instructions which, when the program is executed by the processor 102-b, cause the device 102 to carry out a method for determining a similarity score between a reference eyeglasses frame F and a plurality of model eyeglasses frames F. This method is represented in figure 3 and comprises:
- a step of generating 201 a picture using values of a first subset of physical parameters of the reference eyeglasses frame F,
- a step of selecting 202 at least one of the model eyeglasses frames F, based on values of a second subset of the physical parameters and by comparison of the values of the second subset of the physical parameters of the reference eyeglasses frame F with the values of the second subset of the physical parameters of each of the model eyeglasses frames F,
- a step of determining 203 a similarity score for each of the selected model eyeglasses frames F, using a convolutional neural network, by comparing the picture of the eyeglasses frame F with a picture of the selected model eyeglasses frames F.

In other words, the method, described above, uses as input a set of physical parameters of a frame F obtained by example using a 3D scanner, the measuring arm or traced by the Eye Care Professional. The output of the method is one or several frames F, similar to the frame F. The method allows for example to determine physical information of the frame F identified in a database corresponding to the input.

The physical parameters of the frame F (reference or model) can be:
- Frame tracing format
- Frame trace radius
- Frame trace angle
- Frame trace Z dimension
- Frame trace Z angle dimension
- Trace of the right rim R1 of the frame and the left rim R2 of the frame F, comprising at least one point of a border of a right rim R1 of the eyeglasses frame F, at least one point of a border of a left rim R2 of the eyeglasses frame F
- Distance between the center of the right lens and the center of the left lens
- Height of the frame
- Width of the frame
These physical parameters are obtained using the measurement device 103.

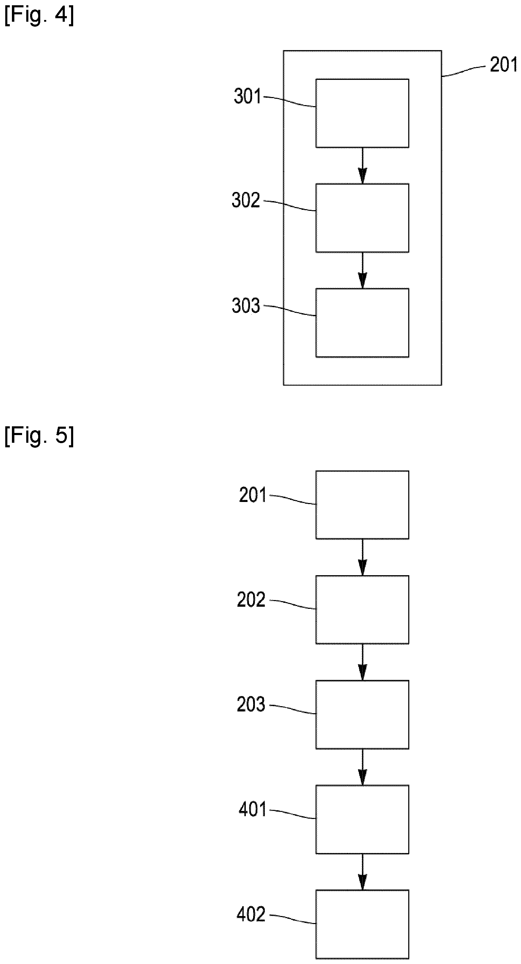

As represented in figure 4, the step of generating 201 the picture comprises:
- a step of generating a first closed line 301 representing the right rim R1 using the at least one point of a border of the right rim R1,
- a step of generating a second closed line 302 representing the left rim R2 using the at least one point of a border of the left rim R2.

In an embodiment the generation of the first closed line 301 and/or the generation of the second closed line 302 is realized by, for each coordinate of the trace, linking it to the following coordinate of the trace with a straight line segment.

The first closed line and the second line are generated such that:
- a longitudinal axis of the first closed line is identical to a longitudinal axis of the second closed line,
- a centre of the first closed line is at a distance of a centre of the second closed line that is equal to the distance separating the centre of the right rim R1 and the centre of the left rim R2.

The step of generating 201 the picture also comprises a step of generating a straight line segment 303 between a first point of the first closed line and a second point of the second closed line. The first point and the second point are the closest points.

The step of generating 201 the picture can also comprise,
- a step of colouring the first closed line based on a distance between at least one point of the first closed line and a front part of the reference eyeglasses frame F and/or
- a step of colouring the second closed line based on a distance between at least one point of the second closed line and the front part.

These steps of colouring allow taking into account the curve or base of the frame F of the eyeglasses.

The step of colouring the first closed line can be realized by:
- determining the distance between the at least one point of the first closed line and the front part,
- selecting a colour of a colour set, each colour of the colour set being associated with a distance,
- applying the colour in a part of the first closed line in the vicinity, for example the 5 pixels the closest to the part of the first closed line, of the at least one point of the first closed line.

The step of colouring the second closed line can be realized by:
- determining the distance between the at least one point of the second closed line and the front part,
- selecting a colour of a colour set, each colour of the colour set being associated with a distance,
- applying the colour in a part of the second closed line in the vicinity, for example the 5 pixels the closest to the part of the second closed line, of the at least one point of the second closed line.

The colour set can comprise shades of grey. Using shades of grey renders the drawing easier and is a standard in computer vision. Each gray has a value coded using 8 bits.

When the generated image is too big and to avoid using a large amount of memory, the size of the generated image can be reduced. For example, when the length of the picture is bigger than 320 pixels or when the width of the picture is bigger than 109 pixels, a step of reducing the size of the picture can be applied.

We can also resize the generated image to make it fit with the size of the input layer of the convolutional neural network.

The step of selecting 202 at least one of the model eyeglasses frames F, can comprise a comparison between the width, the height and the distance between the lenses of the reference eyeglasses frames F and the model eyeglasses frames F.

In an embodiment we select the model frames F respecting one or a plurality of the following criterias:
- their width HBOX absolute difference from the reference frame F width HBOX' (|HBOX-HOBX'I) is lower than 2 mm for example 1 mm,
- their length VBOX absolute difference from the reference frame F length VBOX' (|VBOX-VOBX'|) is lower than 2 mm for example 1 mm,
- their distance between lenses DBL absolute difference from the reference frame F distance between lenses DBL' (|DBL-DBL'|) is lower than 2 mm for example 1 mm.

The convolutional neural network can be a Siamese neural network.

A Siamese neural network (also known as twin neural network) is an artificial neural network that uses the same weights while working in tandem on two different input vectors to compute comparable output vectors. Often one of the output vectors is precomputed, thus forming a baseline against which the other output vector is compared. This is similar to comparing fingerprints but can be described more technically as a distance function for locality-sensitive hashing.

The Siamese neural network comprises two identical neural networks and a cost module. The input to the system is a pair of images. The images are passed through the two identical neural networks, yielding two outputs which are passed to the cost module which produces the similarity score (absolute difference of the outputs through a sigmoid function).

The loss function is Binary Cross Entropy. The gradient of the loss function with respect to the parameter vector controlling both neural networks is computed using back-propagation. The parameter vector is updated with a stochastic gradient method using the sum of the gradients contributed by the two subnets.

In the following description, Cx denotes a convolutional layer, Mx denotes a max-pooling layer, Fx denotes a flatter layer, and Dx denotes a fully connected layer, where x is the layer index.

Each of the independent neural networks can have the following layers:
- a first convolutional layer C1 connected to
- a first max-pooling layer M2 connected to
- a second convolutional layer C3 connected to
- a second max-pooling layer M4 connected to
- a third convolutional layer C5 connected to
- a third max-pooling layer M6 connected to
- a fourth convolutional layer C7 connected to
- a flatten layer F8 connected to
- a dense layer D9.

More precisely in an embodiment, a 2D-aligned 1-channel (shades of gray) frame F image of size 320 by 109 pixels is given to the first convolutional layer C1 with 64 filters of size 20x20x1. The resulting 64 feature maps are then fed to the first max-pooling layer M2 which takes the max over 2x2 spatial neighborhoods with a stride of 2, separately for each channel. This is followed by the second convolutional layer C3 that has 128 filters of size 8x8x1. These 128 features maps are then fed to the second max-pooling layer M4 with the same parameters as the previous one. Then, the third convolutional layer C5 with 128 filters of size 8x8x1 is connected, followed by the third max-pooling layer M6, with the same parameters. This is followed by the fourth convolutional layer C7 that has 256 filters of size 4x4x1. Then, the flatten layer F8 is added, followed by the dense layer D9.

Hyperparameters of both of the independent neural networks can be:
- The activation is of type "relu" for all the layers, except for the dense layer D9 that is implementing a sigmoid function
- The optimizer is of type "Adam"
- The learning rate is equal to 0.00006
- The loss is of type Binary Cross Entropy

In an embodiment represented in figure 5, the method can also comprise:
- a step of selecting 401 among the selected model eyeglasses frames F, the one having the highest similarity score,
- a step of manufacturing 402 a lens based on the selected model eyeglasses frame F.

In this embodiment, the step of manufacturing 402 the lens comprises a step of acquiring physical data of the selected model eyeglasses frame F and a step of determining manufacturing data for fitting the lens into said selected model eyeglasses frame F.

Once the manufacturing data are obtained, at least one of the following steps are realised:
- a step of calculating a back surface that needs to be realized on a lens blank,
- a step of blocking the lens blank wherein a location of a blocker being determined using the selected model eyeglasses frame F,
- a step of surfacing the lens blank based on the selected model eyeglasses frame F,
- a step of polishing the lens blank based on the selected model eyeglasses frame F,
- a step of edging the lens blank based on the selected model eyeglasses frame F and
- a step of grinding a side of the lens blank based on the selected model eyeglasses frame F.

The step of calculating the back surface includes in particular a calculation which one of a number of standardized front surface curvatures is suitable for manufacturing the spectacle lens and a calculation of the exact shape of a back surface that is to be formed.

During the step of blocking the lens blank the blocker is attached to the lens blank. This machine mounting block will allow the lens blank to be held during the following steps. The attachment can be realized using a low melting point alloy, which forms a supportive medium between the front surface of the semi-finished lens blank and the machine mounting block. The diameter to which the supportive blocking medium is applied will depend on the final cribbing diameter for the finished uncut spectacle lens; it is normally made as large as possible to give the best support to the semi-finished lens blank during the back surface machining process.

The step of surfacing the lens blank allows the realisation of the back surface calculated previously. The step of surfacing is also known as the step of machining. In the simplest case the back surface after surfacing will be a concave spherical surface. In other cases, aspherical surfaces are typically produced. In case of a prescription including an astigmatic correction, the back surface may be toric or, to minimize optical aberrations, atoric. If the spectacle lens to be manufactured is a multifocal spectacle lens, in particular a progressive power spectacle lens, the back surface after surfacing is a freeform surface which typically does not show any symmetry and is described by splines.

The step of polishing is realized using a polishing pad or an abrasive disk. Generally only the back surface of the lens blank that has been previously surfaced will be polished. The step of polishing is realized by holding the polishing pad or the abrasive disk against the back surface of the lens blank and to realize a movement, for example a rotation, of the disk or pads against this back surface. In other embodiments the disk or the pad are immobile and the lens is driven in movement, for example a movement of rotation.

During the step of edging, the lens blank is sized to the shape of the frame F, more precisely to the shape of the rim (R1 or R2) of the frame F. To do this we cut down the surface of the edge of the lens blank to the shape of the rim (R1 or R2) of the frame F.

During the step of grinding a groove or a bevel is realized in or on the edge of the lens blank. Generally a bevel is used for metallic or plastic frames F and a groove is used for semi rimless frames F.

In another embodiment the method can comprise a step of displaying the selected model eyeglasses frames F on the screen 104.

## Claims

1. Computer implemented method for determining a similarity score between a reference eyeglasses frame (F) and a plurality of model eyeglasses frames (F), the method comprising
- a step of generating (201) a picture using values of a first subset of physical parameters of the reference eyeglasses frame (F),
- a step of selecting (202) at least one of the model eyeglasses frames (F), based on values of a second subset of the physical parameters and by comparison of the values of the second subset of the physical parameters of the reference eyeglasses frame (F) with the values of the second subset of the physical parameters of each of the model eyeglasses frames (F),
- a step of determining (203) a similarity score for each of the selected model eyeglasses frames (F), using a convolutional neural network, by comparing the picture of the eyeglasses frame (F) with a picture of the selected model eyeglasses frames (F).

2. Method according to the claim 1 the physical parameters comprising:
- at least one point of a border of a right rim (R1) of the eyeglasses frame (F),
- at least one point of a border of a left rim (R2) of the eyeglasses frame (F), and
- a distance separating a centre of the right rim (R1) and a centre of the left rim R2).

3. Method according to the claim 1 or 2, the at least one point of the border of the right rim (R1) and the at least one point of the border of the left rim (R2) being obtained using a 3D scanner or a measuring arm.

4. Method according to the claims 2 or 3, the step of generating (201) the picture comprising:
- a step of generating a first closed line (301) representing the right rim (R1) using the at least one point of a border of the right rim (R1) ,
- a step of generating a second closed line (302) representing the left rim (R2) using the at least one point of a border of the left rim (R2),
a longitudinal axis of the first closed line being identical to a longitudinal axis of the second closed line,
a centre of the first closed line being at a distance of a centre of the second closed line equal to the distance separating the centre of the right rim (R1) and the centre of the left rim (R2), the step of generating (201) the picture also comprising a step of generating a straight line segment (303) between a first point of the first closed line and a second point of the second closed line, the first point and the second point being the closest points.

5. Method according to claim 4, the step of generating the picture (201) also comprising,
- a step of colouring the first closed line based on a distance between at least one point of the first closed line and a front part of the reference eyeglasses frame (F) and/or
- a step of colouring the second closed line based on a distance between at least one point of the second closed line and the front part.

6. Method according to claim 5, the step of colouring the first closed line comprising:
- a step of determining the distance between the at least one point of the first closed line and the front part,
- a step of selecting a colour of a colour set, each colour of the colour set being associated with a distance,
- a step of applying the colour in a part of the first closed line in the vicinity of the at least one point of the first closed line and/or
the step of colouring the second closed line comprising:
- a step of determining the distance between the at least one point of the second closed line and the front part,
- a step of selecting a colour of the colour set,
- a step of applying the colour in a part of the second closed line in the vicinity of the at least one point of the second closed line.

7. Method according to claim 6, the colour set comprising shades of grey.

8. Method according to any one of the claims 1 to 7, the method also comprising, when a length of the picture is bigger than a first threshold or when a width of the picture is bigger than a second threshold, a step of reducing the size of the picture.

9. Method according to any one of the claims 1 to 8, the convolutional neural network being a Siamese neural network.

10. Method according to the claim 9, the Siamese neural network comprising two identical neural networks and a cost module, each neural network comprising :
- a first convolutional layer (C1) connected to
- a first max-pooling layer (M2) connected to
- a second convolutional layer (C3) connected to
- a second max-pooling layer (M4) connected to
- a third convolutional layer (C5) connected to
- a third max-pooling layer (M6) connected to
- a fourth convolutional layer (C7) connected to
- a flatten layer (F8) connected to
- a dense layer (D9).

11. Method according to any one of the claims 1 to 10, also comprising:
- a step of selecting (401) among the selected model eyeglasses frames (F), the one having the highest similarity score,
- a step of manufacturing (402) a lens based on the selected model eyeglasses frame (F).

12. Method according to claim 11, the step of manufacturing (402) the lens comprising:
- a step of acquiring physical data of the selected model eyeglasses frame (F) and
- a step of determining manufacturing data for fitting a lens into said selected model eyeglasses frame (F).

13. Method according to any one of the claims 1 to 12, also comprising:
- a step of displaying the selected model eyeglasses frames (F).

14. Device (102) for determining a similarity score between a selected eyeglasses frame (F) and a plurality of model eyeglasses frames (F), the device comprising a memory (102-a) and a processor (102-b), the device (102) being arranged to execute a method for determining a similarity score between a selected eyeglasses frame (F) and a plurality of model eyeglasses frames (F), the method comprising
- a step of generating (201) a picture using values of a first subset of physical parameters of the reference eyeglasses frame (F),
- a step of selecting (202) at least one of the model eyeglasses frames (F), based on values of a second subset of the physical parameters and by comparison of the values of the second subset of the physical parameters of the reference eyeglasses frame (F) with the values of the second subset of the physical parameters of each of the model eyeglasses frames (F),
- a step of determining (203) a similarity score for each of the selected model eyeglasses frames (F), using a convolutional neural network, by comparing the picture of the eyeglasses frame (F) with a picture of the selected model eyeglasses frames (F).

15. System (101) comprising the device (102) according to claim 14 and a 3D scanner or a measuring arm.
